# EUROPÄISCHE PATENTSCHRIFT

(11) **EP 3 129 560 B1**
(45) Veröffentlichungstag und Bekanntmachung des Hinweises auf die Patenterteilung: **09.01.2019**
(21) Anmeldenummer: 15716024.3
(22) Anmeldetag: 09.04.2015
(51) Int. Cl.: E03F 1/00, B61D 35/00, B63B 29/14, B60R 15/04, B64D 11/02

(54) **PNEUMATISCHE KOMPAKT-VAKUUMTOILETTE**
PNEUMATIC COMPACT VACUUM TOILET
TOILETTE SOUS VIDE PNEUMATIQUE ET COMPACTE

(30) Priorität: 10.04.2014 DE 202014003059 U
(43) Veröffentlichungstag der Anmeldung: 15.02.2017
(73) Patentinhaber: Evac GmbH, 22880 Wedel (DE)
(72) Erfinder: OREMEK, Peter, 22159 Hamburg (DE); AUTZEN, Matthias, 25489 Haselau (DE)
(74) Vertreter: Eisenführ Speiser
(86) Internationale Anmeldenummer: PCT/EP2015/057762
(87) Internationale Veröffentlichungsnummer: WO 2015/155304

(56) Entgegenhaltungen:
- EP-A1- 1 013 838
- EP-A2- 1 840 282
- US-A1- 2004 010 843
- US-A1- 2012 144 573
- US-A1- 2014 013 498

## Beschreibung

Die Erfindung betrifft eine Kompakt-Vakuumtoilette mit einem Toilettenbecken mit einem Ausgangskanal, der in einen Zwischenbehälter mündet, wobei der Zwischenbehälter einen Abwasserkanal aufweist, durch den Abwasser aus dem Zwischenbehälter abgeführt werden kann.

Vakuumtoiletten und Steuerungseinrichtungen hierfür sind bekannt, beispielsweise aus der Gebrauchsmusteranmeldung der Anmelderin DE 20 2013 004 015.7 vom 30. April 2013 und der Gebrauchsmusteranmeldung DE 20 2014 002 712.9 der Anmelderin vom 28. März 2014. Die EP 1 840 282 A2 beschreibt ein Abwassersystem mit einem Abwasserbehälter, eine mit dem Abwasserbehälter über ein Auslassventil verbundene Abwasserleitung, einem Vakuumerzeugungsmittel zur Erzeugung von Vakuum in der Abwasserleitung und einem Steuermechanismus zum Steuern des Auslassventils. Aus der US 2004/010843 A1 ist ein wasserloses Vakuum-WC-System für ein Flugzeug bekannt umfassend eine Toilettenschüssel, die über ein Saugventil und ein Abfallsammelrohr zu einem Abfallsammeltank verbunden ist. Die EP 1 013 838 A1 offenbart ein Vakuumabwassersystem mit einer Sanitäreinheit für periodische Entleerungszyklen, einem ersten Abwasserrohr, das über ein normalerweise geschlossenes erstes Abwasserventil mit der Sanitäreinrichtung verbunden ist, Mittel zur Erzeugung von Vakuum im ersten Abwasserrohr und Mittel zum anschließenden Betätigen des ersten Abwasserventils, um einen vakuuminduzierten Abfalltransport von der Sanitäreinrichtung durch das erste Abwasserrohr zu ermöglichen, beispielsweise zu einem Sammelbehälter, einem kommunalen Abwasserkanal oder dergleichen. Aus EP 1 752 589 A ist noch ein Vakuum-Toilette für ein Fahrzeug bekannt, wobei ein Zwischenbehälter zwischen einem Ausgangsventil und einem Abwasserventil angeordnet wird.

Während in einigen Anwendungsgebieten die Neuausstattung beispielsweise von Zügen mit Vakuumtoiletten seit Längerem üblich ist, existieren Anwendungsgebiete, in denen Vakuumtoiletten bisher nicht, oder zumindest nur selten eingesetzt werden. Beispielsweise existiert eine Vielzahl von älteren Zügen, in denen Vakuumtoiletten aufgrund deren Komplexität und Kosten nicht eingesetzt wurden bzw. werden, sondern stattdessen Sanitäreinrichtungen eingesetzt werden, bei denen die Abwasserabfuhr aus einem Toilettenbecken oder Urinal direkt unter Schwerkrafteinfluss erfolgt. In solchen Systemen ist insbesondere die Geruchsbelastung für Nutzer dieser Sanitäranlagen sehr hoch.

Es ist daher eine Aufgabe der vorliegenden Erfindung, eine Kompakt-Vakuumtoilette anzugeben, welche einen oder mehrere der genannten Nachteile verringert oder beseitigt. Insbesondere ist es eine Aufgabe der vorliegenden Erfindung, eine Kompakt-Vakuumtoilette anzugeben, welche eine einfache und/oder kostengünstige Lösung zur Neuausstattung und/oder Nachrüstung von Sanitäranlagen bietet. Ferner ist es eine Aufgabe der vorliegenden Erfindung, ein Verfahren zur Steuerung einer Kompakt-Vakuumtoilette anzugeben.

Die Aufgabe wird erfindungsgemäß gelöst durch eine pneumatische Kompakt-Vakuumtoilette nach Anspruch 1.

Die pneumatische Kompakt-Vakuumtoilette gemäß der Erfindung umfasst zunächst ein Toilettenbecken mit einem Ausgangskanal, durch den Abwasser aus dem Toilettenbecken in einen Zwischenbehälter gelangt. Der Zwischenbehälter weist dazu vorzugsweise eine Einlassöffnung auf, über die der Abwasserkanal in den Zwischenbehälter mündet. Ein Toilettenbecken im Sinne dieser Beschreibung kann auch ein Urinal sein.

Der Zwischenbehälter weist einen Abwasserkanal auf, durch den Abwasser aus dem Zwischenbehälter abgeführt werden kann, beispielsweise in einen Abwassertank oder in einen Bioreaktor. Als Abwasser wird hier insbesondere eine Mischung aus Urin, Fäkalien und/oder Spülwasser verstanden.

Im Ausgangskanal und im Abwasserkanal ist jeweils ein pneumatisches Absperrventil angeordnet. Es besteht somit ein Strömungsweg vom Toilettenbecken durch den Ausgangskanal in den Zwischenbehälter und durch den Abwasserkanal für Abwasser, wobei dieser Strömungsweg durch das Ausgangsventil und durch das Abwasserventil freigegeben und gesperrt werden kann.

Der Zwischenbehälter ist, vorzugsweise mittels eines Injektors, mit einem Vakuum bzw. einem Unterdruck beaufschlagbar, um Abwasser aus dem Toilettenbecken durch den Ausgangskanal in den Zwischenbehälter zu befördern. Der Zwischenbehälter weist hierzu vorzugsweise einen Steuerluftleitungsanschluss auf, über den ein Unterdruck im Zwischenbehälter erzeugt werden kann, durch den, bei geöffnetem Ausgangsventil, Abwasser aus dem Toilettenbecken in den Zwischenbehälter befördert werden kann. Beim Aufbau des Unterdrucks im Zwischenbehälter ist vorzugsweise das Abwasserventil geschlossen. Unter einem Unterdruck wird hier ein geringerer Druck als der Umgebungsdruck, insbesondere der atmosphärische Druck, verstanden. Insbesondere wird unter einem Unterdruck ein relativer Unterdruck von mindestens -20 kPa, vorzugsweise mindestens -50 kPa gegenüber dem Umgebungsdruck bzw. dem atmosphärischen Druck verstanden.

Erfindungsgemäß ist vorgesehen, dass sowohl das Ausgangsventil als auch das Abwasserventil als pneumatische Absperrventile ausgebildet sind. Ein Absperrventil kann auch als Sperrventil oder Durchflussverhinderungsventil bezeichnet werden. Die pneumatische Betätigung des Ausgangs- und/oder des Abwasserventils erfolgt mittels Druckluft, insbesondere durch Aufbau eines Überdrucks oder eines Unterdrucks. Auf diese Weise kann auf elektrische Energie zur Betätigung der Absperrventile verzichtet werden, was eine einfachere Gestaltung der Kompakt-Vakuumtoilette ermöglicht.

Ferner sieht die erfindungsgemäße Kompakt-Vakuumtoilette vor, dass der Zwischenbehälter und der Abwasserkanal so angeordnet sind, dass Abwasser aus dem Zwischenbehälter durch den Abwasserkanal unter Schwerkrafteinfluss abgeführt werden kann. Auf diese Weise kann auf zusätzliche Maßnahmen zur Abführung des Abwassers aus dem Zwischenbehälter verzichtet werden. Gleichzeitig ist jedoch mit dem Ausgangsventil und/oder dem Abwasserventil die Möglichkeit gegeben, eine Sperre zwischen dem Ausgang des Abwasserkanals (und beispielsweise einem daran angrenzenden Abwassertank oder Bioreaktor) auf der einen Seite und einem Benutzer auf der anderen Seite zu realisieren, so dass die Geruchsbelastung deutlich reduziert werden kann.

Durch die Kombination einer rein pneumatischen Ansteuerung mit Abwasserabfuhr unter Schwerkrafteinfluss und Ventilsperre zur Reduzierung der Geruchsbelastung eignet sich die erfindungsgemäße pneumatische Kompakt-Vakuumtoilette insbesondere zur kostengünstigen Ausrüstung und/oder Nachrüstung von Zügen, bei denen sonst einfache Sanitäreinrichtungen mit ausschließlich Abwasserabfuhr unter Schwerkrafteinfluss zum Einsatz kommen.

Eine bevorzugte Ausführungsform sieht vor, dass das Ausgangsventil und/oder das Abwasserventil als Quetschventil ausgebildet ist bzw. sind. Ein Quetschventil kann auch als Schlauchventil oder Schlauchquetschventil bezeichnet werden. Ein solches Ventil eignet sich besonders gut für eine pneumatische Betätigung.

In einer weiteren bevorzugten Ausgestaltung ist vorgesehen, dass das Ausgangsventil in der geschlossenen, ersten Ausgangsventilstellung vorgespannt ist und durch eine pneumatische Betätigung in die zweite, geöffnete Ausgangsventilstellung überführbar ist.

Die, vorzugsweise drucklose, Normalstellung des Ausgangsventils ist somit die erste, geschlossene Ausgangsventilstellung. Erst durch eine pneumatische Betätigung kann das Ausgangsventil gegen die Vorspannung in die zweite, geöffnete Ausgangsventilstellung gebracht werden. Vorzugsweise erfolgt die pneumatische Betätigung des Ausgangsventils durch Beaufschlagung mit einem Unterdruck.

Die Ausbildung des Ausgangsventils derart, dass es in der geschlossenen, ersten Ausgangsventilstellung vorgespannt ist, hat unter anderem den Vorteil, dass in dieser Normalstellung durch das geschlossene Ausgangsventil eine Sperre zwischen dem Toilettenbecken und einem Ausgang des Abwasserkanals hin zu einem Abwassertank oder Bioreaktor realisiert ist, und auf diese Weise eine deutliche Reduzierung der Geruchsbelastung erfolgt. Die Betätigung des Ausgangsventils in die zweite, geöffnete Ausgangsventilstellung erfolgt vorzugsweise nur im Rahmen eines Spülvorgangs.

Ferner ist bevorzugt, dass das Ausgangsventil in der geschlossenen, ersten Ausgangsventilstellung mechanisch vorgespannt ist, vorzugsweise durch eine Feder. Diese Art der Vorspannung hat den Vorteil, ebenfalls ohne elektrische Energie auszukommen, und ergänzt daher die ansonsten rein pneumatisch angesteuerte Kompakt-Vakuumtoilette in vorteilhafter Weise.

Gemäss der Erfindung ist vorgesehen, dass eine Normalstellung des Abwasserventils der ersten, geöffneten Abwasserventilstellung entspricht, und das Abwasserventil durch eine pneumatische Betätigung in die zweite, geschlossene Abwasserventilstellung überführbar ist. Das Abwasserventil ist somit in einer Normalstellung, insbesondere in einer drucklosen Normalstellung, geöffnet, und wird erst bei pneumatischer Betätigung, vorzugsweise durch Beaufschlagung mit Druckluft, geschlossen. Auf diese Weise ist in der Normalstellung des Abwasserventils der Abwasserkanal zwischen dem Zwischenbehälter und einem Abwassertank oder einem Bioreaktor geöffnet, so dass eine Abwasserabfuhr unter Schwerkrafteinfluss erfolgen kann.

Ferner ist bevorzugt, dass das Abwasserventil angeordnet und ausgebildet ist, bei Unterbrechung einer Druckluftversorgung in die erste, geöffnete Abwasserventilstellung überzugehen. Auf diese Weise wird sichergestellt, dass nach der Betätigung des Abwasserventils zum Schließen dieses Ventils das Abwasserventil wieder in die erste, geöffnete Abwasserventilstellung zurückgeht. Ein Schließen des Abwasserventils ist insbesondere dann vorgesehen, wenn im Zwischenbehälter ein Unterdruck aufgebaut werden soll. Da ansonsten vorzugsweise das Ausgangsventil in seiner Normalstellung geschlossen ist, kann das Abwasserventil in der Normalstellung geöffnet sein, da bereits durch das Ausgangsventil eine Sperre zur Reduzierung der Geruchsbelastung realisiert ist.

Die vorliegende Erfindung ist gekennzeichnet durch eine Steuerungsvorrichtung, die angeordnet und ausgebildet ist, bei Einleiten eines Spülvorgangs durch einen Benutzer das Abwasserventil in die zweite, geschlossene Abwasserventilstellung zu bringen und im Zwischenbehälter einen Unterdruck aufzubauen, und bei Erreichen eines Zielunterdrucks im Zwischenbehälter das Ausgangsventil in die zweite, geöffnete Ausgangsventilstellung zu bringen.

Ein Spülvorgang der pneumatischen Kompakt-Vakuumtoilette wird vorzugsweise durch einen Benutzer eingeleitet, insbesondere durch Betätigen eines Betätigungselements. Eine Steuerungsvorrichtung, die vorzugsweise signaltechnisch mit dem Betätigungselement verbunden ist, steuert dann den Spülvorgang, indem das Abwasserventil in die zweite, geschlossene Abwasserventilstellung gebracht wird, und im Zwischenbehälter ein Unterdruck aufgebaut wird. Wenn ein bestimmter Zielunterdruck erreicht ist, wird das Ausgangsventil von der Steuerungsvorrichtung so angesteuert, dass es durch eine pneumatische Betätigung in die zweite, geöffnete Ausgangsventilsteuerung übergeht und damit der Ausgangskanal freigegeben wird, durch den dann durch den Unterdruck im Zwischenbehälter Abwasser aus dem Toilettenbecken in den Zwischenbehälter gesaugt wird. Der Zielunterdruck beträgt vorzugsweise mindestens -50 kPa gegenüber dem Umgebungsdruck bzw. dem atmosphärischen Druck. Anschließend wird die Betätigung des Ausgangsventils gestoppt, so dass das Ausgangsventil durch die Vorspannung wieder in die erste, geschlossene Ausgangsventilstellung übergeht. Ferner wird auch die pneumatische Betätigung des Abwasserventils wieder gestoppt, so dass auch das Abwasserventil wieder in die erste, geöffnete Abwasserventilstellung übergeht und dadurch das aus dem Toilettenbecken in den Zwischenbehälter gesaugte Abwasser gravitätisch durch den Abwasserkanal abfließen kann.

Der Unterdruck wird im Zwischenbehälter vorzugsweise durch einen Injektor erzeugt, der mit der Steuerungsvorrichtung, vorzugsweise über eine Druckluftversorgungsleitung, verbunden ist.

Die Steuerungsvorrichtung ist vorzugsweise ebenfalls eine pneumatische Steuerung und kann insbesondere ausgebildet sein wie in der DE 20 2013 004 015 beschrieben. Ferner ist bevorzugt, dass die Steuerung ein pneumatisches Steuerungsventil wie in der Gebrauchsmusteranmeldung der Anmelderin vom 28. März 2014 beschrieben ist.

Eine weitere bevorzugte Ausführungsform ist gekennzeichnet durch ein Schnellentlüftungsventil, das in einer Druckluftversorgungsleitung vor dem Abwasserventil angeordnet und ausgebildet ist, einen Entlüftungskanal freizugeben, wenn ein Druck in der Druckluftversorgungsleitung zwischen dem Schnellentlüftungsventil und dem Abwasserventil höher ist als in der Druckluftversorgungsleitung vor dem Schnellentlüftungsventil.

Alternativ oder zur zusätzlichen oben beschriebenen selbstständigen bzw. selbsttätigen Öffnung des Abwasserventils nach Beendigung seiner pneumatischen Betätigung kann vorgesehen sein, das Abwasserventil über ein Schnellentlüftungsventil wieder in den geöffneten Zustand zu bringen. Dieses Schnellentlüftungsventil ist vorzugsweise in der Druckluftversorgungsleitung angeordnet, die das Abwasserventil mit Druckluft zur pneumatischen Betätigung versorgt. Solange die Druckluftversorgungsleitung mit Druckluft beaufschlagt ist, wird diese Druckluft vorzugsweise durch das Schnellentlüftungsventil von einer Druckluftquelle zum Abwasserventil durchgeleitet und so das Abwasserventil in der geschlossenen Stellung erhalten. Wenn die Druckluftversorgung endet, das heißt der Druck zwischen dem Schnellentlüftungsventil und dem Abwasserventil höher ist als der Druck in der übrigen Druckluftversorgungsleitung vor dem Schnellentlüftungsventil, öffnet ein Entlüftungskanal, der die Abführung der Druckluft aus dem Abwasserventil ermöglicht. Das Schnellentlüftungsventil ist vorzugsweise zwischen der Steuerungsvorrichtung und dem Abwasserventil angeordnet.

Gemäß einem weiteren Aspekt der Erfindung wird die eingangs genannte Aufgabe gelöst durch ein Verfahren zur Steuerung einer pneumatischen Kompakt-Vakuumtoilette, umfassend:
- Bereitstellen einer zuvor beschriebenen pneumatischen Kompakt-Vakuumtoilette,
- Nach dem Einleiten eines Spülvorgangs durch einen Benutzer, pneumatische Betätigung des Abwasserventils, um das Abwasserventil in die zweite, geschlossene Abwasserventilstellung zu bringen,
- Aufbauen eines Unterdrucks im Zwischenbehälter,
- Pneumatische Betätigung des Ausgangsventils, um das Ausgangsventil in die zweite, geöffnete Ausgangsventilstellung zu bringen,
- Beenden der pneumatischen Betätigung des Abwasser- und des Ausgangsventils.

Das Verfahren und seine möglichen Fortbildungen weisen insbesondere Merkmale bzw. Verfahrensschritte auf, die sie dafür geeignet machen, für eine erfindungsgemäße pneumatische Kompakt-Vakuumtoilette und ihre Fortbildungen verwendet zu werden. Zu den Vorteilen, Ausführungsvarianten und Ausführungsdetails des Verfahrens und seiner möglichen Fortbildungen wird auf die vorangegangene Beschreibung zu den entsprechenden Vorrichtungsmerkmalen verwiesen.

Bevorzugte Ausführungsformen der Erfindung werden beispielhaft anhand der beiliegenden Figuren beschrieben. Es zeigen:
- Figur 1:: eine beispielhafte Ausführungsform einer erfindungsgemäßen pneumatischen Vakuum-Kompakttoilette im Querschnitt;
- Figur 2:: eine mögliche alternative Ausgestaltung des Abschnitts A der Druckluftversorgungsleitung gemäß Figur 1.

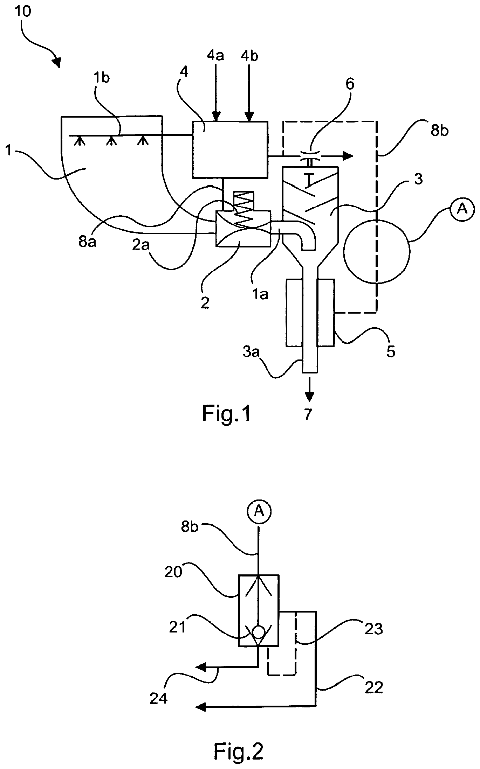

In Figur 1 ist eine pneumatische Kompakt-Vakuumtoilette 10 dargestellt, die ein Toilettenbecken 1 und einen Zwischenbehälter 3 aufweist. Das Toilettenbecken 1 ist mit dem Zwischenbehälter 3 über einen Ausgangskanal 1a verbunden, der über eine Einlassöffnung in den Zwischenbehälter 3 mündet. Der Zwischenbehälter 3 ist über einen Abwasserkanal 3a mit einem Abwassertank oder Bioreaktor (nicht dargestellt) verbunden. Im Ausgangskanal 1a ist ein Ausgangsventil 2 angeordnet, das als Quetschventil ausgebildet ist und den Ausgangskanal 1a in einer ersten Ausgangsventilstellung verschließt und in einer zweiten Ausgangsventilstellung freigibt. Das als Quetschventil ausgebildete Ausgangsventil 2 ist durch die Feder 2a in der geschlossenen, ersten Ausgangsventilstellung vorgespannt. Der Abwasserkanal 3a weist ein Abwasserventil 5 auf, das ebenfalls als Quetschventil ausgebildet ist, jedoch in der drucklosen Normalstellung geöffnet ist, so dass Abwasser in Richtung 7 gravitätisch aus dem Zwischenbehälter 3 abfließen kann.

Die pneumatische Kompakt-Vakuumtoilette 10 weist ferner eine Steuerungseinrichtung 4 auf. Die Steuerungsvorrichtung 4 ist mit einem Wassereingang 4a und einer Druckluftversorgung 4b verbunden. Über die Wasserleitung 4a wird Spülwasser über die Leitung 1b mit Düsen in das Toilettenbecken 1 geleitet. Ferner kann Druckluft über die Druckluftversorgung 4b und die Druckluftversorgungsleitung 8a zur pneumatischen Ansteuerung des Ausgangsventils 2 genutzt werden. Ferner werden über eine weitere Druckluftversorgungsleitung 8b der Injektor 6 zur Erzeugung eines Unterdrucks im Zwischenbehälter 3 und das Abwasserventil 5 angesteuert, so dass eine pneumatische Betätigung durch Beaufschlagung mit Druckluft das Abwasserventil 5 schließen kann.

In der drucklosen Normalstellung ergibt sich vorzugsweise der in Figur 1 dargestellte Zustand der pneumatischen Kompakt-Vakuumtoilette 10 mit geschlossenem Ausgangsventil 2 geöffnetem und Abwasserventil 5. Auf diese Weise stellt das geschlossene Ausgangsventil 2 einen Geruchsschutz zwischen dem Toilettenbecken 1 und einem sich an den Ausgang des Abwasserkanals 3a anschließenden Abwassertank oder Bioreaktor dar. Gleichzeitig wird durch das geöffnete Abwasserventil 5 sichergestellt, dass Abwasser aus dem Zwischenbehälter 3 in Richtung des Pfeils 7 abfließen kann.

Wenn ein Benutzer einen Spülvorgang durch Betätigen eines Betätigungselements (nicht dargestellt) initiiert, wird von der Steuerungsvorrichtung 4 vorzugsweise Spülflüssigkeit über die Leitung 1b mit Düsen in das Toilettenbecken 1 gegeben. Ferner steuert die Steuerungsvorrichtung 4 durch Beaufschlagung der Leitung 8b mit Druckluft den Injektor 6 und das Abwasserventil 5 an. Dadurch wird das Abwasserventil 5 geschlossen, und durch den Injektor 6 wird im Zwischenbehälter 3 ein Unterdruck aufgebaut. Wenn dieser Unterdruck groß genug ist bzw. einen Sollwert erreicht, wird durch die Steuerungsvorrichtung 4 über die Druckluftversorgungsleitung 8a das Ausgangsventil 2 gegen die Vorspannung der Feder 2a geöffnet, sodass der im Zwischenbehälter 3 vorherrschende Unterdruck Abwasser aus dem Toilettenbecken 1 durch den Ausgangskanal 1a in den Zwischenbehälter 3 saugt. Wenn die Leitung 8b nicht mehr mit Druckluft beaufschlagt wird, öffnet das Abwasserventil 5 wieder, so dass der Abwasserkanal 3a freigegeben wird und das aus dem Toilettenbecken 1 in den Zwischenbehälter 3 gesaugte Abwasser in Richtung des Pfeils 7 unter Schwerkrafteinfluss abfließen kann. Das Ausgangsventil 2 schließt nach Beendigung der Betätigung durch die Vorspannung wieder, so dass ein Geruchsschutz realisiert ist.

Figur 2 zeigt ein Schnellentlüftungsventil 20, das in dem in Figur 1 mit A dargestellten Leitungsabschnitt der Leitung 8b eingesetzt werden kann. Bei Beaufschlagung der Leitung 8b mit Druckluft wird Druckluft durch das Schnellentlüftungsventil 20 und den weiteren Leitungsabschnitt 22 zum Abwasserventil 5 geleitet. Das Ventil 21 im Schnellentlüftungsventil 20 ist dabei geschlossen. Auf diese Weise kann die Durchleitung von Druckluft von der Druckluftquelle 4b über die Steuerungsvorrichtung 4 und die Leitung 8b sowie den Leitungsabschnitt 22 zum Abwasserventil 5 erfolgen. Wenn die Leitung 8b nicht mehr mit Druckluft beaufschlagt wird, kann das Ventil 21 öffnen, da über den Leitungsabschnitt 23 der gleiche, hohe Druck anliegt wie im Leitungsabschnitt 22, der höher ist als der Druck in der Leitung 8b nach Beendigung der Druckluftversorgung. Über den Leitungsabschnitt 23 und den weiteren Leitungsabschnitt 24, der das Schnellentlüftungsventil vorzugsweise mit der Umgebung verbindet, kann so der im Leitungsabschnitt 22 zwischen dem Schnellentlüftungsventil 20 und dem Abwasserventil 5 noch vorherrschende Druck schnell abgebaut werden, so dass das Abwasserventil 5 schnell wieder öffnet, um nach dem Absaugvorgang, mit dem Abwasser aus dem Toilettenbecken 1 in den Zwischenbehälter 3 gesaugt wurde, das Abwasser aus dem Zwischenbehälter 3 durch den Abwasserkanal 3a abfließen lassen zu können.

Durch die in den Figuren 1 und 2 gezeigten beispielhaften, vorteilhaften Ausführungsformen wird eine pneumatische Kompakt-Vakuumtoilette bereitgestellt, deren Betrieb allein mit einer Druckluft- und einer Wasserversorgung auskommt, und insbesondere auf elektrische Energie verzichtet und damit auch für einfache, kostengünstige Anwendungsgebiete und insbesondere auch Nachrüstungen anwendbar ist. Ferner wird durch die Ventilgestaltung auch eine Sperre zwischen dem Toilettenbecken 1 und einem Ausgangsabwasserkanal sichergestellt, sodass die Geruchsbelastung deutlich reduziert werden kann. Mit der dargestellten pneumatischen Kompakt-Vakuumtoilette kann somit bei einfacher und kostengünstiger Gestaltung der Benutzerkomfort deutlich erhöht werden.

## Patentansprüche

1. Pneumatische Kompakt-Vakuumtoilette (10),
mit einem Toilettenbecken (1) mit einem Ausgangskanal (1a), der in einem Zwischenbehälter (3) mündet, wobei der Zwischenbehälter (3) einen Abwasserkanal (3a) aufweist, und
wobei der Ausgangskanal (1a) ein Ausgangsventil (2) aufweist, das angeordnet und ausgebildet ist, den Ausgangskanal (1a) in einer ersten Ausgangsventilstellung zu verschließen und in einer zweiten Ausgangsventilstellung freizugeben, und der Abwasserkanal (3a) ein Abwasserventil (5) aufweist, das angeordnet und ausgebildet ist, den Abwasserkanal (3a) in einer ersten Abwasserventilstellung freizugeben und in einer zweiten Abwasserventilstellung zu verschließen, und
wobei das Ausgangsventil (2) und das Abwasserventil (5) als pneumatische Absperrventile ausgebildet sind, wobei eine Normalstellung des Abwasserventils (5) der ersten, geöffneten Abwasserventilstellung entspricht, und das Abwasserventil (5) durch eine pneumatische Betätigung in die zweite, geschlossene Abwasserventilstellung überführbar ist, **gekennzeichnet durch** eine Steuerungsvorrichtung (4), die angeordnet und ausgebildet ist, bei Einleiten eines Spülvorgangs durch einen Benutzer das Abwasserventil (5) in die zweite, geschlossene Abwasserventilstellung zu bringen und im Zwischenbehälter (3) einen Unterdruck aufzubauen, und bei Erreichen eines Zielunterdrucks im Zwischenbehälter (3) das Ausgangsventil (2) in die zweite, geöffnete Ausgangsventilstellung zu bringen, wobei Abwasser durch den Abwasserkanal (3a) aus dem Zwischenbehälter (3) unter Schwerkrafteinfluss abgeführt werden kann.

2. Pneumatische Kompakt-Vakuumtoilette (10) nach Anspruch 1, **dadurch gekennzeichnet, dass** das Ausgangsventil (2) und/oder das Abwasserventil (5) als Quetschventil ausgebildet ist bzw. sind.

3. Pneumatische Kompakt-Vakuumtoilette (10) nach mindestens einem der vorhergehenden Ansprüche,
**dadurch gekennzeichnet, dass** das Ausgangsventil (2) in der geschlossenen, ersten Ausgangsventilstellung vorgespannt ist und durch eine pneumatische Betätigung in die zweite, geöffnete Ausgangsventilstellung überführbar ist.

4. Pneumatische Kompakt-Vakuumtoilette (10) nach mindestens einem der vorhergehenden Ansprüche,
**dadurch gekennzeichnet, dass** das Ausgangsventil (2) in der geschlossenen, ersten Ausgangsventilstellung mechanisch vorgespannt ist, vorzugsweise durch eine Feder (2a).

5. Pneumatische Kompakt-Vakuumtoilette (10) nach mindestens einem der vorhergehenden Ansprüche,
**gekennzeichnet durch** ein Schnellentlüftungsventil (20), das in einer Druckluftversorgungsleitung (8b) vor dem Abwasserventil (5) angeordnet und ausgebildet ist, einen Entlüftungskanal (23, 24) freizugeben, wenn ein Druck in der Druckluftversorgungsleitung (22) zwischen dem Schnellentlüftungsventil (20) und dem Abwasserventil (5) höher ist als in der Druckluftversorgungsleitung (8b) vor dem Schnellentlüftungsventil (20).

6. Verfahren zur Steuerung einer pneumatischen Kompakt-Vakuumtoilette (10),
umfassend:
- Bereitstellen einer pneumatischen Kompakt-Vakuumtoilette (10) nach einem der vorhergehenden Ansprüche,
- Nach dem Einleiten eines Spülvorgangs durch einen Benutzer, pneumatische Betätigung des Abwasserventils (5), um das Abwasserventil (5) in die zweite, geschlossene Abwasserventilstellung zu bringen,
- Aufbauen eines Unterdrucks im Zwischenbehälter (3),
- Pneumatische Betätigung des Ausgangsventils (2), um das Ausgangsventil (2) in die zweite, geöffnete Ausgangsventilstellung zu bringen,
- Beenden der pneumatischen Betätigung des Abwasser- und des Ausgangsventils (5, 2).

## Claims

1. A pneumatic compact vacuum toilet (10)
comprising a toilet bowl (1) with an outlet channel (1a) which opens into an intermediate tank (3), wherein the intermediate tank (3) has a wastewater channel (3a), and
wherein the outlet channel (1a) has an outlet valve (2) which is arranged and designed to close the outlet channel (1a) in a first outlet valve position and to open it in a second outlet valve position, and the wastewater channel (3a) has a wastewater valve (5) which is arranged and designed to open the wastewater channel (3a) in a first wastewater valve position and to close it in a second wastewater valve position, and
wherein the outlet valve (2) and the wastewater valve (5) are designed as pneumatic shut-off valves, wherein
a normal position of the wastewater valve (5) corresponds to the first, open wastewater valve position and the wastewater valve (5) is able to be brought into the second, closed wastewater valve position by means of pneumatic activation,
**characterized by** a control device (4) which is arranged and designed to bring the wastewater valve (5) into the second, closed wastewater valve position and to create a negative pressure in the intermediate tank (3) when a flushing process is initiated by a user, and, once a target negative pressure is reached in the intermediate tank (3), to bring the outlet valve (2) into the second, open outlet valve position, wherein wastewater (7) can be discharged gravitationally through the wastewater channel (3a) from the intermediate tank (3).

2. A pneumatic compact vacuum toilet (10) in accordance with claim 1, **characterized in that** the outlet valve (2) and/or the wastewater valve (5) is/are designed as a pinch valve.

3. A pneumatic compact vacuum toilet (10) in accordance with at least one of the previous claims,
**characterized in that** the outlet valve (2) is pretensioned in the closed first outlet valve position and able to be brought into the second, open outlet valve position by means of pneumatic activation.

4. A pneumatic compact vacuum toilet (10) in accordance with at least one of the previous claims,
**characterized in that** the outlet valve (2) is mechanically pretensioned in the closed first outlet valve position, preferably by means of a spring (2a).

5. A pneumatic compact vacuum toilet (10) in accordance with at least one of the previous claims,
**characterized by** a quick vent valve (20) which is arranged inside a compressed air supply line (8b) before the wastewater valve (5) and designed to open a vent duct (23, 24), if a pressure in the compressed air supply line (22) between the quick vent valve (20) and the waste water valve (5) is higher than in the compressed air supply line (8b) before the quick vent valve (20).

6. A method for controlling a pneumatic compact vacuum toilet (10) comprising the steps of:
- providing a pneumatic compact vacuum toilet (10) in accordance with one of the previous claims,
- after the initiation of a flush process by a user, pneumatically activating the wastewater valve (5) in order to bring the wastewater valve (5) into the second, closed wastewater valve position,
- creating a negative pressure in the intermediate tank (3),
- pneumatically activating the outlet valve (2) in order to bring the outlet valve (2) into the second, open outlet valve position,
- stopping the pneumatic activation of the wastewater and the outlet valve (5, 2).

## Revendications

1. Toilette sous vide pneumatique et compacte (10), avec une cuvette (1) avec une conduite de sortie (1a), qui débouche dans un réservoir intermédiaire (3), dans laquelle le réservoir intermédiaire (3) présente une conduite d'eaux usées (3a), et
dans laquelle la conduite de sortie (1a) présente une vanne de sortie (2), qui est agencée et réalisée pour fermer la conduite de sortie (1a) dans une première position de vanne de sortie et la libérer dans une deuxième position de vanne de sortie, et la conduite d'eaux usées (3a) présente une vanne d'eaux usées (5), qui est agencée et réalisée pour libérer la conduite d'eaux usées (3a) dans une première position de vanne d'eaux usées et la fermer dans une deuxième position de vanne d'eaux usées, et
dans laquelle la vanne de sortie (2) et la vanne d'eaux usées (5) sont réalisées en tant que vannes d'arrêt pneumatiques, dans laquelle une position normale de la vanne d'eaux usées (5) correspond à la première position de vanne d'eaux usées ouverte, et la vanne d'eaux usées (5) peut être passée dans la deuxième position de vanne d'eaux usées fermée par un actionnement pneumatique,
**caractérisée par** un dispositif de commande (4), qui est agencé et réalisé pour amener, lors du lancement d'un rinçage par un utilisateur, la vanne d'eaux usées (5) dans la deuxième position de vanne d'eaux usées fermée et établir une dépression dans le réservoir intermédiaire (3), et, lorsque la dépression cible est atteinte dans le réservoir intermédiaire (3), amener la vanne de sortie (2) dans la deuxième position de vanne de sortie ouverte, dans laquelle les eaux usées peuvent être évacuées du réservoir intermédiaire (3) par la conduite d'eaux usées (3a) sous l'effet de la gravité.

2. Toilette sous vide pneumatique et compacte (10) selon la revendication 1,
**caractérisée en ce que** la vanne de sortie (2) et/ou la vanne d'eaux usées (5) est ou sont réalisée/s en tant que vanne à manchon déformable.

3. Toilette sous vide pneumatique et compacte (10) selon au moins l'une quelconque des revendications précédentes,
**caractérisée en ce que** la vanne de sortie (2) est précontrainte dans la première position de vanne de sortie fermée et peut être amenée dans la deuxième position de vanne de sortie ouverte par un actionnement pneumatique.

4. Toilette sous vide pneumatique et compacte (10) selon au moins l'une quelconque des revendications précédentes,
**caractérisée en ce que** la vanne de sortie (2) est précontrainte mécaniquement dans la première position de vanne de sortie fermée, de préférence par un ressort (2a).

5. Toilette sous vide pneumatique et compacte (10) selon au moins l'une quelconque des revendications précédentes,
**caractérisée par** une vanne de purge rapide (20), qui est agencée et réalisée dans une conduite d'alimentation en air comprimé (8b) en amont de la vanne d'eaux usées (5) pour libérer une conduite de purge (23, 24), lorsqu'une pression dans la conduite d'alimentation en air comprimé (22) entre la vanne de purge rapide (20) et la vanne d'eaux usées (5) est supérieure à celle dans la conduite d'alimentation en air comprimé (8b) en amont de la vanne de purge rapide (20).

6. Procédé de commande d'une toilette sous vide pneumatique et compacte (10),
comprenant :
- la mise à disposition d'une toilette sous vide pneumatique et compacte (10) selon l'une quelconque des revendications précédentes,
- après le lancement d'un rinçage par un utilisateur, l'actionnement pneumatique de la vanne d'eaux usées (5) pour amener la vanne d'eaux usées (5) dans la deuxième position de vanne d'eaux usées fermée,
- l'établissement d'une dépression dans le réservoir intermédiaire (3),
- l'actionnement pneumatique de la vanne de sortie (2) pour amener la vanne de sortie (2) dans la deuxième position de vanne de sortie ouverte,
- l'arrêt de l'actionnement pneumatique des vannes d'eaux usées et de sortie (5, 2).
